# EUROPEAN PATENT APPLICATION

(11) **EP 1 164 364 A1**
(43) Date of publication of application: **19.12.2001**
(21) Application number: 00905080.8
(22) Date of filing: 22.02.2000
(51) Int. Cl.: G01G 19/00

(54) **DEVICE FOR ASSESSING POSTAGE OF MAIL ENVELOPES**

(30) Priority: 22.02.1999 ES 9900554 U
(71) Applicant: Promotec Publicidad, SL, 08026 Barcelona (ES)
(72) Inventor: MESTRES ARMENGOL, Fernando, E-08026 Barcelona (ES); LOPEZ FERNANDEZ, Francisco, E-08026 Barcelona (ES)
(74) Representative: Manresa Val, Manuel
(86) International application number: ES0000062
(87) International publication number: WO0050855

(57) **Abstract**

The invention relates to a device for assessing postage of mail envelopes, consisting of a tubular foldable single-pieced pre-printed laminar material body (1). Said body has legs (3b) defining a transversal fulcrum line (F) and one or more slots (5, 6, 7) located topwise in an overhang area (4) of said body. The device tilts relative to said fulcrum line when the weight of an envelope (S) inserted into one of said slots exceeds a given threshold. When folded, the device has a wide and flat configuration with rectilinear edges. The device also comprises means (3c) to suddenly tilt the tubular body (2) when said given weight threshold is exceeded, in addition to counterweight means (19a) for facilitating a wider weighting range and precise calibration of the device while the material maintains its size and thickness.

## Description

### Technical Field

The present invention concerns a device for assessing the postage of mail envelopes, said device being of the type formed by a foldable, tubular body obtained from one only piece of sheet material being advantageously made of cardboard, Bristol board or the like and being apt to receive graphic information to be printed on it, said body being provided with feet defining a transverse fulcrum line as well as with one or more slots located in the upper portion of an overhanging area of said body. The device is apt to be tilted or not around said fulcrum line depending on if the weight of an envelope placed in one of said slots surpasses or not a predetermined threshold.

The device of the invention adopts when in a folded condition a flat shape thereby openly displaying said graphic information and being apt to be introduced into an envelope and to thus be sent for example by mail. Said device is especially apt to be used in the field of the corporative gift articles, advertising promotion, etc.

### Background of the Invention

An example of this type of device is disclosed by patent US-A-2,335,693 to Carl T. Osterberg, said device being formed from a sheet material forming a tubular body of triangular cross-section with side panels and a base panel being foldable along a central line. The tubular body is provided with supporting feet leaving a portion of said body in an overhanging arrangement, said overhanging portion having upperly arranged slots provided to support an envelope arranged on edge in a substantially erect position, said slots at one of their edges incorporating tabs provided to press the envelope in such a way that this latter then leans against an opposite edge in a predetermined position. Those feet being closest to the overhanging portion have a radiused area provided to be in contact with the flat surface on which they rest and defining a fulcrum line. Depending on the weight of the deposited envelope the tubular body will be tilted or not around said fulcrum line, the supported portion of the tubular body being of sufficient length to act as a counterweight for the envelope deposited in one of the slots provided in the overhanging portion.

A drawback of said device lies in the fact that the supported portion of the tubular body has to be of big size in order to effectively act as a counterweight especially if what is intended is to determine the postage for those mail envelopes being within the higher weight ranges, said big size entailing an increased inherent cost of the material and at the same time causing the device when in the folded condition to be inadequate to be introduced into those standardized envelopes most commonly used in the postal services, as well as causing the device when in its erected condition to be difficult to place as a stationery item. In order to effectively act as a counterweight without exceeding reasonable dimensions the whole assembly should alternatively be carried out in a sheet material of increased thickness and density probably being still more costly and not standardized and hence making it difficult to carry out the cutting, bending and folding operations needed to produce the device whose cost would be thus further increased.

The use of a sheet material of an increased thickness of more than 0.8 mm does furthermore create serious difficulties as regards its printing and manipulation (die-cutting, denting, etc.), and does generally require to use two superimposed, pressure-glued sheets of which only one will be printed before said sheets are attached to each other. The use of two pressure-glued sheets does nevertheless involve the same or even additional difficulties as regards the manipulations such as the cutting and folding operations being necessary to configure this device.

Another drawback lies in the fact that the feet determining the fulcrum line have said edge of radiused shape having a not very marked convexity. Such a radiused shape causes the contact points to be shifted along said radiused edges in a progressive tilting motion thus resulting in a low sensitivity to register the switching from one to another weight range especially in the case of those envelopes whose weight is close to said switching point.

Also known is on the other hand the patent application PCT WO-A-98/52005 filed by the present applicant and disclosing a device for assessing the postage of letters or postal matter of this type, said device basically incorporating the characteristics constituting the preamble of Claim 1. Although such a device has proved to be effective in practice, the applicant has found that in order to achieve a higher accuracy and a longer durability in operation while facilitating the storage and transportation of the device without lessening its ulterior performances, and also in order to achieve a cost reduction, a number of improvements need to be incorporated.

Said improvements concern in particular:
- the provision of counterweight means allowing to keep within bounds the dimensions of the device especially once having been folded, and to encompass a wider weighing range;
- the provision of means allowing to bring about a sudden, nonprogressive tilting of the tubular body when an envelope deposited in a slot exceeds even by a narrow margin the weight threshold foreseen for said slot;
- the reinforcement of some areas of the device being more prone to deteriorate with the use, such as the feet determining the fulcrum, thus prolonging the useful life of the assembly;
- the provision of means to allow to repeatedly fold and unfold the base panel in the two possible senses while avoiding the fatigue failure of the material;
- the provision of means to correct a shape retention acquired by the device after having been in a folded condition for a period of time;
- the general protection of the material without a reduction of the adhesional force of the glue on the mutually attached surfaces;
- the provision of means to improve the centring of the envelopes in the seating slots provided to receive them; and
- the simplification and full automatization of the process for manufacturing the device, including the possible execution of additional operations such as a post-printing operation or a sticking of labels on an area having been reserved for such a purpose in the tubular body in its folded condition.

The object of the present invention is hence to achieve the above-mentioned improvements in a device of the type having been described above.

### Summary of the Invention

Said object is attained by providing a device for assessing the postage of mail envelopes, said device being obtained from one only piece of sheet material such as cardboard, said one only piece being provided with openings, indentations and/or slits to facilitate its erection, and at a first end comprising an overlapping portion provided to be attached to the edge of a second end in such a way that in the erected condition a generally prismatic, tubular body is defined which more typically has a cross-section in the shape of an isosceles triangle and comprises at least side panels being apt to receive graphic information to be printed on them, and a base panel being foldable along its central line. Feet being provided to support said tubular body on a horizontal and flat surface with said base panel substantially parallel to this latter project from the lateral edges of the base panel as an extension of the side panels. Two of said feet provide points of contact with said flat surface, said contact points defining said fulcrum line being arranged in a transversal arrangement with respect to the tubular body, in such a way that a portion of the tubular body is thus arranged in an overhanging arrangement with respect to said fulcrum line. Said one or more slots upperly provided in said overhanging portion are substantially positioned as per a vertical plane being parallel to the fulcrum line, said slots defining one or more seating supports provided to receive a mail envelope. Each of the slots is at a distance from the fulcrum line, said distance having been set in terms of a predetermined weight range whose value either in weight or in postage money is displayed by means of an indication associated to each slot and generally printed in a directly adjacent area. The weight of an envelope placed in one of said slots is thus capable of causing the tubular body to be tilted or not around the fulcrum line depending on if said weight is above or below the threshold having been predetermined for each slot and coinciding with the value being displayed by the corresponding indication.

In order to provide the supported portion of the tubular body with an overweight counterweight means have been provided which comprise an extension of an area of said overlapping portion advantageously comprised between said fulcrum feet and the end of said overlapping portion in the supported portion, the length of said extension being predetermined in terms of the desired counterweight, said extension being superimposed on a portion of the inner surface of one of the side panels of the tubular body.

It has been also foreseen to use at least an area of the side panels of the tubular body as a support for a group of additional sheets forming a promotional brochure, a calendar or the like and bound through adequate means such as a spiral with the apex of the dihedron formed by said side panels, in such a way that said sheets can be turned over on top of the tubular body to be thus flipped from one to the other side of this latter without varying their mass centre with respect to the longitudinal direction of the tubular body. The group of additional sheets together with the binding means are of a known weight and are positioned in a predetermined longitudinal position in such a way that the device can be calibrated so that said group of additional sheets together with said binding means serve as additional counterweight means apt to be used to assess the postage of mail envelopes especially for the higher weight ranges.

The device of the invention incorporates a special contour for the fulcrum feet provided in order to bring about a sudden, nonprogressive tilting when the weight of the envelope placed in a slot exceeds even by a small margin the weight indicated for said slot. Said contour is formed by two edges with different inclinations whose intersection creates a vertex at the point being most distant from the bottom panel, said vertex being radiused in order to thus offer more resistance to the frictional wear caused by its rubbing against the flat surface. The edge corresponding to the supported portion has a curvi-convex profile, whereas the edge being closest to the overhanging portion has a slope and a transition to said radiused vertex which are such as to provide an area of possible points of contact with said flat surface, which area is small enough to assure that said sudden tilting will be produced, and wide enough to avoid a premature wear of said area caused by the pressure or friction exerted against the flat surface supporting the device.

The reduced contact area of said radiused vertices is nevertheless more prone to wear. In order to prevent this means have been provided to reinforce and rigidify an area of said fulcrum feet which includes said points of contact with said flat surface, i.e. the radiused vertices, said means comprising one or more layers of a rigidizing and/or hardening material such as a glue or a varnish applied on said area of the fulcrum feet, especially on the edges of the sheet material corresponding to said area.

Another area being prone to fatigue wear and in the prior art devices creating failure problems is the precited central line of the base panel, repeated 180° foldings being usually carried out in both senses around said folding line thereby causing a premature fatigue of the material. In order to mitigate said risk of failure said central folding line is formed by a slit cut along a great portion of said central line (in the same way as has been already set forth in connection with the device disclosed by the above-mentioned patent WO-A-98/52002) without reaching any of the edges of the base panel. The portions of the central line comprised between the ends of said slit and said edges of the base panel are each formed by an embossed indentation provided in both faces. The ends of the slit are delimited by small transverse slits provided to prevent said embossed indentations from being torn.

The automatic folding machines deliver the device folded as per a configuration wherein the side panels are superimposed and the base panel is folded along its central line and extends outwardly from the side panels.

A problem created by the prior art devices concerns a shape retention acquired by the device after having remained for some time (a few days are enough) in the folded condition as per said extended configuration. When the device is then put in the erected condition said shape retention intervenes to cause the base panel to have a tendency to again fold towards the outside thus coming to rest through the central folding line on the table top thus distorting the scale effect or even cancelling the tiltability of the tubular body. To obviate this drawback in the prior art devices a manual operation is carried out in order to change the devices from said extended, folded configuration into another also folded configuration but with the base panel folded along its central line but introduced between the two side panels. This manual manipulation causes a substantial increase of the production costs, and in the new folded condition the devices create several drawbacks. On the one hand the feet of the device are then projecting from a rectangular outline of the folded tubular body and are hence greatly risking to be damaged by a collision or impact befalling them. On the other hand the projecting feet do not allow to easily align the devices and are a hindrance for example when proceeding to introduce said devices into envelopes. The base panel interposed between the side panels does besides cause the folded device to have a bigger thickness at this side, this forcing to alternately reverse the devices when piling them up to thus correct this difference in thickness.

In order to solve this problem the present invention provides small tongues extending from one of the halves of the base panel and projecting from it in such a way that when the device is in the erected condition they lean against the inner surface of the feet corresponding to the side of the tubular body being attached to said half of the base panel being provided with said tongues. By virtue of a certain resilience of the sheet material said small tongues cause the base panel to have a tendency to remain when in the erected condition slightly folded towards the inside thus maintaining its central line away from the supporting surface. This allows to more safely store the devices in their wide, folded configuration as they are delivered by the automatic folding machine without any ulterior manipulations, as well as to carry out ulterior operations such as a localized post-printing e.g. by letterpress, block or silk-screen printing or the like, to stick labels or to fit a group of additional sheets as has been mentioned, all of said operations being undertaken from said wide, folded configuration happening to be more adequate for their execution. These ulterior operations can be carried out by the producer or later on by a customer being either a wholesaler or a retail dealer, in order to personalize the product.

In the prior art devices the one only piece of sheet material from which the tubular body is formed is usually provided with means to protect and/or embellish the sheet material, said means comprising a layer of a transparent, waterproof material such as a plastic lining or a varnish applied on the totality or on a big portion of one or both faces of said one only piece.

In the device of the present invention said layer is nevertheless not applied on certain areas so as not to reduce the adhering action exerted by an adhesive or glue deposited on them for their attachment in order to form the tubular body. This furthermore allows to use a conventional adhesive of the type used to glue cardboard, for example, this type of adhesive being commercially available at a reduced cost. If a varnish is used certain areas will be reserved in order to ulteriorly carry out in them the pertinent operations.

The present invention does also introduce an improvement to said slots defining seating supports provided to receive a mail envelope. Each of said slots does thus comprise parallel edges ending at both ends in end portions converging in a "V"-shaped arrangement to mutually join in radiused vertices provided to support and concentrate the weight of an envelope deposited in a slot in said point. This improves the accuracy of the scale function since the respective distances from each slot to the fulcrum line are in this way more accurately delimited.

Another important aspect of the device for assessing the postage of mail envelopes as per the present invention consists in the provision of a simplified and fully automated process for manufacturing said device, said process allowing to produce pre-printed devices ready for their storage and prepared to directly receive additional operations if desired without needing to in any way be manipulated by an operator. The process allows as well to carry out a post-printing localized in an area having been reserved for such a purpose in a pre-printing operation.

The details of such improvements and of said process will be best understood with the aid of a nonlimiting example illustrating an embodiment of the present invention.

### Brief Description of the Drawings

What follows is a description of an exemplary embodiment of a device for assessing the postage of mail envelopes as per the present invention with reference to the accompanying drawings in which:
Fig. 1 is a perspective view showing a device as per the present invention in an erected condition, ready for operation and prepared to receive an envelope to assess its postage;
Fig. 2 is an enlarged detail view showing the contour of one of the feet determining the fulcrum in the device of Fig. 1;
Fig. 3 is a plan-view of one only piece of sheet material in a spread out condition before its erection, said one only piece comprising a number of slits, notches and embossed indentations, the device of Fig. 1 being obtained from said one only piece;
Fig. 3a shows in a cross-sectional view some details respectively illustrating from top to bottom a slit, a notch and an embossed indentation such as those configuring the different elements of the one only piece of sheet material of Fig. 3;
Fig. 4 is a front elevation of the device of Fig. 1 in an erected condition, with an enlarged detail (Fig. 4a) shown in a perspective view illustrating the above-mentioned means provided to correct the shape retention;
Fig. 5 is a perspective view showing a device like that of Fig. 1 integrating a group of sheets attached to it and having been incorporated in an ulterior operation, said group of sheets furthermore serving as an additional counterweight;
Fig. 6 is a plan-view illustrating a stage of an operation carried out to apply a plastic film to a sheet of sheet material before die-cutting the devices of the invention;
Fig. 7 is a plan-view illustrating a stage of an operation carried out to apply a varnish layer to a sheet of sheet material before die-cutting the devices of the invention;
Fig. 8 is a perspective view illustrating a piled up arrangement of a plurality of devices like those of Fig. 1 in their flat, wide, folded configuration; and
Fig. 9 is a perspective view illustrating one of the devices of Fig. 8 at the very moment when said device is being submitted to an ulterior post-printing operation.

### Detailed Description of the Preferred Exemplary Embodiments

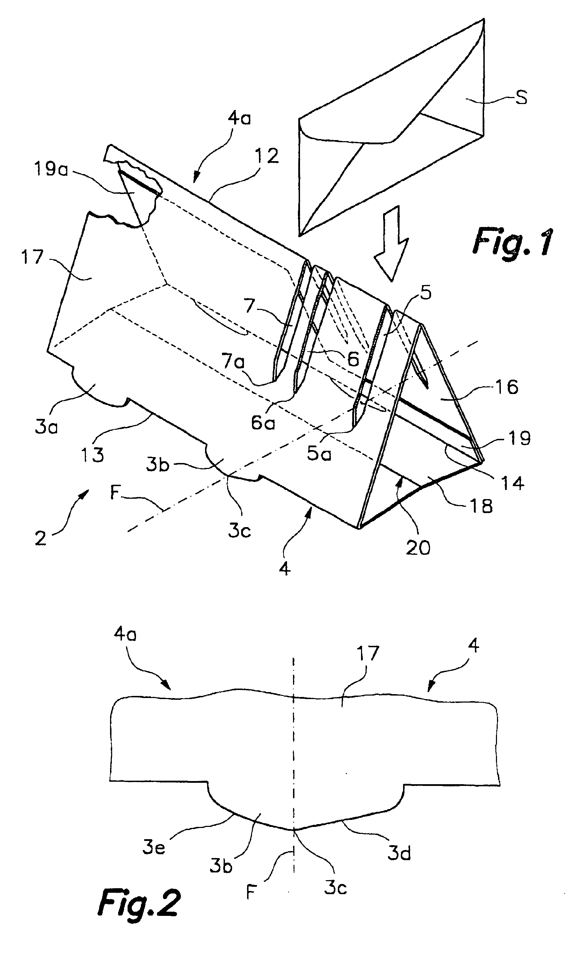

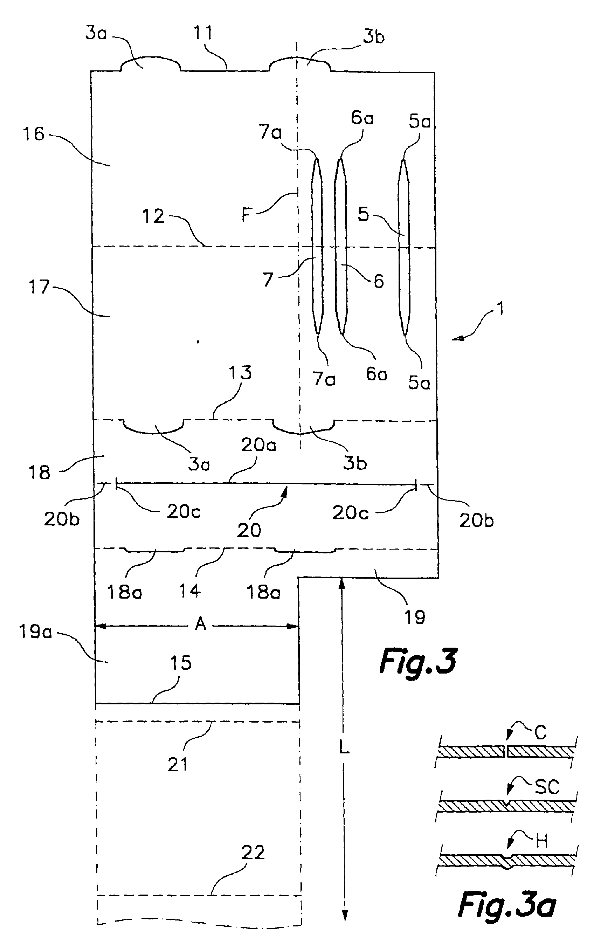

Firstly referring to Fig. 1 this latter shows at 2 a tubular body having been obtained from one only piece 1 of a sheet material being substantially rigid, such as Bristol board or cardboard material, said one only piece 1 being shown in greater detail in Fig. 3 in its spread out condition. Said tubular body 2 is in this case of a cross-section having the shape of an isosceles triangle, and comprises a first side panel 16 and a second side panel 17 being apt to receive graphic or written information to be printed on them, and a base panel 18 being foldable along its central line 20, one edge of said base panel 18 having an overlapping portion 19 provided to be attached to the free edge of the inner surface of the first side panel 16. A couple of supporting feet 3a and a couple of fulcrum feet 3b support said tubular body 2 on a horizontal, flat surface in such a way that the lateral edges of said base panel 18 remain parallel to said horizontal, flat surface. The fulcrum feet 3b provide points of contact with said flat surface, said contact points defining a fulcrum line F being arranged in a transverse arrangement with respect to tubular body 2, a portion 4 of said tubular body 2 being arranged in an overhanging arrangement with respect to said fulcrum line F, whereas a portion 4a of tubular body 2 is resting on the feet 3a, 3b at the opposite side of fulcrum line F.

In an area of the upper dihedron corresponding to said overhanging portion 4 of tubular body 2 are located several slots 5, 6, 7 extending along a length across the side panels 16, 17, said slots being symmetrical with respect to the apex of the upper dihedron and being arranged in such a way that the two branches of each of them in each of said side panels are directly facing each other. Each of said slots 5, 6, 7 defines a substantially vertical plane being parallel to said fulcrum line F, and forms a seating support provided to receive a mail envelope S in a substantially erect arrangement. Each slot 5, 6, 7 comprises parallel edges ending at both ends in end portions converging in a "V"-shaped arrangement to mutually join in radiused vertices 5a, 6a, 7a provided to support and concentrate the weight of the envelope S in said point. The distance from the fulcrum line F to each of the vertical planes defined by each slot 5, 6, 7 (comprising each pair of radiused vertices 5a, 6a, 7a) has been predetermined according to the weight of the portion of the tubular body of the opposite side of the fulcrum line in order to assess the postage of mail envelopes S corresponding to different ratings.

For a better operability of the device a corresponding indication of weight and/or of the postage rate is associated to each slot 5, 6, 7. Said for example impressed or printed indication is situated in an area being close to a lower end of each slot 5, 6, 7 in the second side panel 17, and in order to facilitate the identification of said indications differentiated colour stripes have been provided which surround and extend beyond each slot 5, 6, 7.

As has been said before, the determination of said distances from the fulcrum line F to the corresponding slots 5, 6, 7 is carried out in terms of the weight of the sheet material of the supported portion 4a of tubular body 2 comprised between the fulcrum line F and the end of said tubular body 2 which is opposite to the overhanging portion 4. The grammage of the sheet material, i.e. the thickness or density of the used cardboard, is hence selected together with the geometric dimensions of the assembly for an accurate calibration of the device at the design stage.

In order to endow said supported portion with a bigger weight without increasing the grammage of the cardboard (to thus facilitate the cutting and folding operations, etc.) and without prolonging its length in order to thus make sure that the device will take up a reduced space when in the erected condition and that when in the folded condition its dimensions will make it apt to be put into the most commonly used standardized mail envelopes counterweight means have been provided which comprise an extension 19a of an area of said overlapping portion 19 advantageously comprised between said points of said fulcrum feet 3b contacting the flat surface and the end of said overlapping portion 19 in the supported portion 4a, said extension having a length that is predetermined in terms of the desired counterweight, said extension 19a being superimposed on a portion of the inner surface of the first side panel 16 of said tubular body 2.

When because of the desired counterweight a length of said extension 19a of the overlapping portion 19 is needed which is longer than the height of the first panel 16, for example when planning to encompass ratings corresponding to higher weights, said extension 19a is apt to incorporate one or more embossed indentation lines along which to be bent to form two or more pleats that will be superimposed on the inner surfaces of the corresponding panels 16, 17, 18.

The weight of an envelope S placed in any of the slots 5, 6, 7 and thus centred in the corresponding radiused vertices 5a, 6a, 7a is thus capable of causing said tubular body 2 to be tilted or not around the fulcrum line F depending on if said weight is above or below a predetermined threshold coinciding with the weight value displayed by each indication corresponding to each slot 5, 6, 7.

With an exemplary embodiment of the device such as the illustrated one having three slots it is possible to determine four weight or postage rate ranges. For a better understanding of the invention and only by way of example let it be assumed that the indications of the slots 5, 6, 7 indicate 20 gr., 50 gr. and 100 gr., respectively. The four ratings would correspond to the following:
up to 20 gr.: the device is not tilted with the envelope placed in the slot corresponding to 20 gr.;
from 20 gr. to 50 gr.: the device is tilted with the envelope placed in the slot corresponding to 20 gr., and is not tilted with the envelope placed in the slot corresponding to 50 gr.;
from 50 gr. to 100 gr.: the device is tilted with the envelope placed in the slot corresponding to 50 gr., and is not tilted with the envelope placed in the slot corresponding to 100 gr.; and
above 100 gr.: the device is tilted with the envelope placed in the slot corresponding to 100 gr.

It is obvious that the closer to the fulcrum line F a slot is, the higher the weight threshold needed to tilt the tubular body 2 around said fulcrum line will be; i.e. that the indications of the slots will be in a decreasing order as they grow more distant from said fulcrum line.

Referring now to Fig. 2, in order to endow the device of the present invention with a high sensitivity to register the switching from one to another weight range the fulcrum feet 3b have been provided with a special contour in order to make sure that the tilting takes place in a sudden, nonprogressive way when the weight of the envelope S placed in one slot 5, 6, 7 exceeds even by a small margin the weight indicated for said slot.

Said contour is formed by two edges 3d, 3e having different configurations and inclinations and whose intersection creates a vertex 3c, said vertex 3c being radiused for a better resistance to the frictional wear caused by its rubbing against the flat surface. Said edge 3e is the one corresponding to the supported portion 4a of tubular body 2, and has a curvi-convex profile, whereas said edge 3d is within the overhanging portion 4 and is provided with a slight slope and a transition to said radiused vertex 3c, said slope and transition being such that they provide an area of possible points of contact with said flat surface, which area is small enough to assure said sudden tilting, and wide enough to avoid a premature wear of said area caused by the pressure or friction exerted against the flat surface supporting the device, said edge 3d providing an immediate support due to its slight inclination.

Due to the fact that the reduced contact area of said radiused vertices 3c is more prone to wear means have been optionally provided to reinforce and rigidify an area of said fulcrum feet 3b which includes said points of contact with said flat surface, i.e. the radiused vertices 3c, said means comprising one or more layers of a rigidizing and/or hardening material such as a glue or a varnish applied on said area of the fulcrum feet 3b, especially on the edges of the sheet material corresponding to said area. The application of said means is nevertheless difficult to carry out in a mechanized or automated process, and is usually carried out manually, this resulting in an increase of the production cost. For this reason said means are only applied in those cases in which they are deemed necessary, such as for example in devices for assessing the postage of envelopes prepared to operate within higher weight ranges, or for devices provided to reach a long service life.

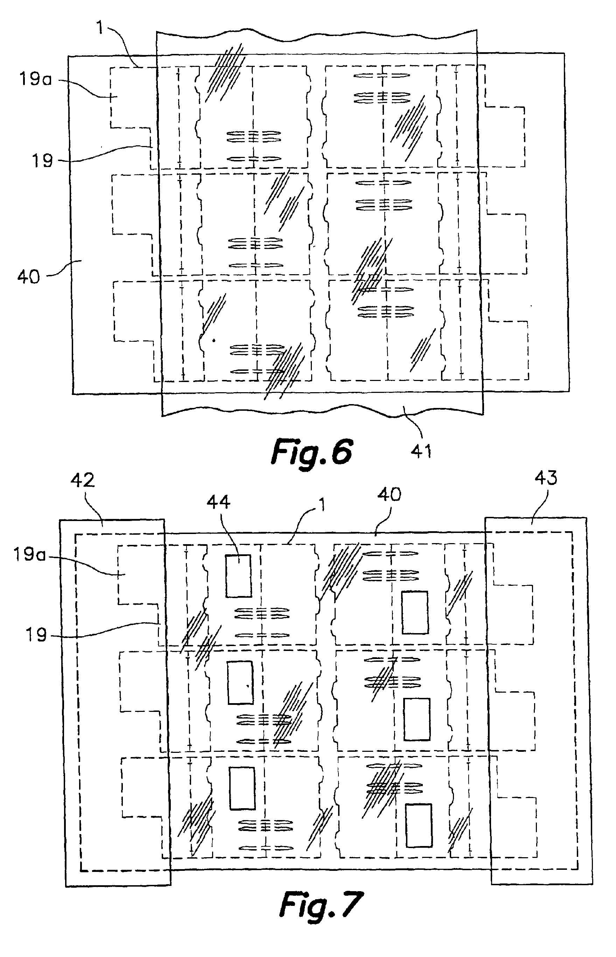

Fig. 3 shows the one only piece 1 in its spread out condition before being erected to form the tubular body 2 of Fig. 1. Said one only piece 1 is of a sheet material such as Bristol board or cardboard, and has been obtained by die-cutting (see Figs. 6 and 7) thereby incorporating contours, openings, slits, notches and embossed indentation lines.

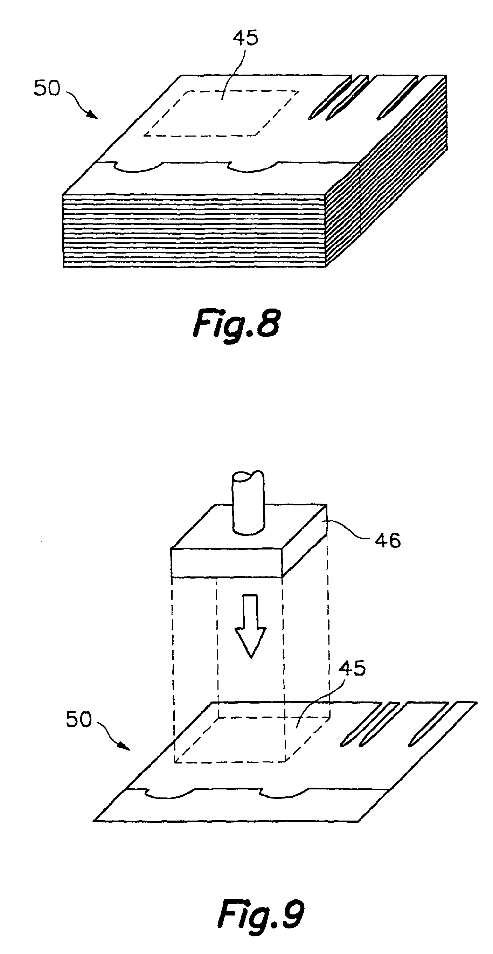

It is to be pointed out that the one only piece 1 is provided with means for protecting and/or embellishing said sheet material, said means consisting in a layer of a transparent, waterproof material such as a plastic lining or a varnish applied on one of the surfaces of said one only piece 1 provided to be on the outside of the device both in its erected condition forming said tubular body 2 and in its folded condition forming a wide, flat configuration 50 (see Figs. 8 and 9.) Said plastic lining or varnish does not cover the overlapping portion 19 nor its extension 19a in the first place because their surfaces are not facing the outside, and in the second place in order not to reduce the adhering action of an adhesive or glue applied to the overlapping portion 19 for its attachment to the inner surface of the first side panel 16 thus allowing to use a conventional adhesive of those being commercially available at a reduced cost. When what is applied is varnish it is besides possible to reserve a free, unvarnished space coinciding with a free space having been reserved during a printing stage and apt for a post-printing operation. The present invention has provided a process for the application of said protecting and/or embellishing means, said process being explained in more detail below with reference to Figs. 6 and 7.

The one only piece 1 does besides comprise: a first rectilinear edge 11 incorporating two projecting tabs respectively forming one of the supporting feet 3a close to an end of said first edge 11, and one of said fulcrum feet 3b distant from the other end of said first edge 11; an embossed indentation line 12 parallel to said first edge 11; a first intermittent notch 13 parallel to said first edge 11; a second intermittent notch 14 parallel to said first edge 11; and a second edge 15 parallel to said first edge 11. Thus are defined: the first side panel 16 between said first edge 11 and said embossed indentation line 12; the second side panel 17 between said embossed indentation line 12 and said first notch 13; the base panel 18 between said first notch 13 and said second notcn 14; and the overlapping 'portion 19, with its corresponding extension 19a, between said second notch 14 and said second edge 15.

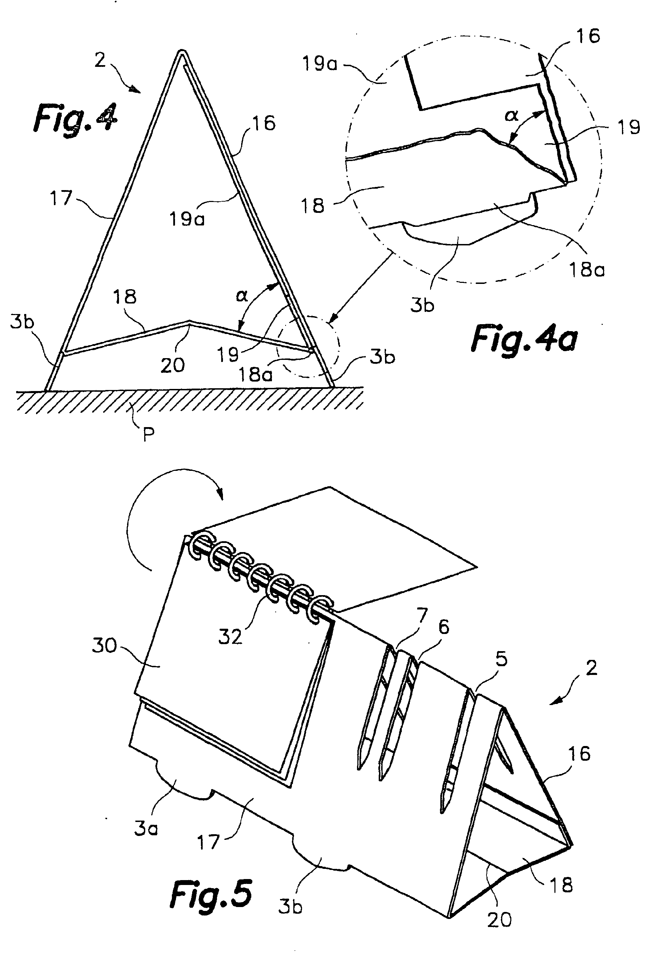

Said first intermittent notch 13 comprises three mutually separated lengths joined by slits reproducing in a symmetrical arrangement with respect to the embossed indentation line 12 another corresponding supporting foot 3a and another corresponding fulcrum foot 3b, whereas said intermittent second notch 14 comprises three mutually separated lengths joined by slits defining small tongues 18a extending towards the inside of the overlapping portion 19. The function of said small tongues 18a will be explained below in connection with Fig. 4.

Openings with an oblong configuration corresponding to the slots 5, 6, 7 are arranged perpendicularly to said embossed indentation line 12 and extend along the same length at both sides of this latter across the first and second side panels 16, 17 in an area comprised between the radiused vertices 3c of the fulcrum feet 3b and the end being most distant from the supporting feet 3a.

The extension 19a does not extend along the whole longitudinal extension of the overlapping portion 19, but only along a portion of width A comprised between the end of said overlapping portion being closest to the supporting feet and an area not surpassing the fulcrum feet. Said width A can be varied depending on the needed counterweight, without exceeding said limits. The extension 19a can nevertheless extend beyond a distance equal to the height of the first side panel 16, in which case a first auxiliary embossed indentation line 21 is arranged in order to allow to bend the extension 19a and to arrange it in a superimposed arrangement on the inner surface of the first side panel 16 and of a portion or the totality of the second side panel 17. More weight could still be provided by extending the extension 19a beyond the distance corresponding to the added up heights of the first and second side panels 16, 17 and by providing a second auxiliary embossed indentation line 22, and so on, thus providing a prolonged band of width A and length L.

Said dimensions A and L are chosen during the design in terms of the thickness of the sheet material and the number and geometrical distribution of the slots 5, 6, 7 provided to receive the envelopes to be assessed. In order to facilitate the identification of said slots bands of differentiated colours can be provided surrounding and extending beyond them, as has been said before.

The device as per the present invention comprises means provided to facilitate the folding of said base panel 18 along its central line 20 in the two possible senses, and to mitigate the risk of failure along said central line 20 due to fatigue caused by repeated 180° foldings in one or both senses. Said means are formed by a slit 20a cut along a substantial portion of said central line 20 without reaching any of its two ends, and by an embossed indentation 20b (see Fig. 3a, reference H) provided in both sides of each of the portions of said central line 20 comprised between the slit 20a and the lateral ends of the base panel 18. The ends of slit 20a are delimited by small transverse slits 20c provided to prevent said embossed indentations from being torn.

The folding lines between the side panel 17 and the base panel 18 and between this latter and the overlapping portion 19 are on the other hand weakened in the one only piece 1 (see Fig. 3) by means of notches 13 and 14, respectively.

Fig. 3a does graphically illustrate from top to bottom: a slit C, i.e. a complete splitting of the material which is used to cut out contours and to separate pieces or portions of a piece; a notch SC, i.e. a cut of limited depth affecting only one portion of the thickness of the material from the side which when being folded forms an obtuse angle, said notch being used for those portions to be bent without offering much resistance; and an embossed indentation H, i.e. a pressure indented line provided without executing a cutting action in one side of the material and being in correspondence with a bulged line on the opposite side, said embossed indentation being carried out without a substantial reduction of the sheet thickness, and being used for those folds being supposed to withstand higher stresses.

This arrangement of slits, notches and embossed indentations responds to the fact that the central line 20 of the base panel 18 is in the first place folded outwardly during the automated operations carrying out the gluing of the overlapping portion 19 and its adhesion to the first side panel 16, in such a way that without any additional manipulations a very flat, wide, folded configuration is obtained which has rectilinear outer limits with no projecting elements and can thus be more practically and safely stored.

Due to the fact of having remained for a long time in the wide, folded configuration the base panel 18 presents a certain shape retention hence having in the erected condition a tendency to bend towards the outside thus running the risk to make contact with the supporting flat surface.

Fig. 4 shows a front view of the device of the present invention in the erected condition. The enlarged detail of Fig. 4a shows in a sectional view an area of the tubular body 2 where small tongues 18a being an extension of one of the halves of the base panel 18 (see also Fig. 3) project from said half of the base panel thus in the erected condition leaning against the inner surface of feet 3a, 3b corresponding to this same side of the tubular body 2 thus causing base panel 18 to in the erected condition have a tendency to remain slightly folded towards the inside thus maintaining its central line 20 away from the flat supporting surface.

The lateral bending lines of said base panel 18 have in their turn been arranged in form of said notches 13, 14 since both in the wide, folded configuration and in the narrow, folded configuration said lines are always bent towards the same side and by an angle of less than 90°.

The obtention of the device of the present invention by means of fully automated die-cutting, folding and gluing operations from one only piece 1 of sheet material responds to eminently financial criteria with a view to reduce the costs of the manufacturing, assembly and commercialization processes. It is nevertheless obvious that the device could be as well obtained from different separate pieces provided to be attached or assembled together, especially as regards the counterweight.

The tubular body 2 could in effect be carried out from one only piece with all the characteristics described above except for the extension 19a of the overlapping portion 19. To fulfil the counterweight function it would suffice with adding a small piece of a sheet material of high density, such as for example a plastics material with a high amount of filler consisting in a heavy metal, adhered at a selected position of the tubular body 2, or any other piece of a heavy material.

Fig. 5 shows a device of the present invention in which it has been foreseen to use at least an area of the side panels 16, 17 of the tubular body 2 as a support for a group of additional sheets 30 forming a promotional brochure, a calendar or the like, said sheets being bound through adequate means such as a spiral 32 with the apex of the dihedron formed by said side panels 16, 17, in such a way that said sheets 30 can contain graphic information on both their sides, and can be turned over on top of the tubular body to be thus flipped from one to the other side of this latter without varying their mass centre with respect to the longitudinal direction of the tubular body. Since the group of additional sheets 30 together with the binding means 32 are of a known weight and are positioned in a predetermined longitudinal position they can be used as additional counterweight means in such a way that the device can be calibrated to assess the postage of mail envelopes especially for the higher weight ranges.

It is important to point out that the device of the present invention is obtained by means of an automated process including process stages in which a sheet material is submitted to pre-printing operations, die-cutting, bending, gluing and bonding operations to provide the tubular body 2, this latter emerging from the automated process in said flat, wide, folded configuration 50. In the prior art devices a manual operation was required in order to change the devices from said wide, folded configuration into a narrow, folded configuration for their storage, in order to thus avoid the drawbacks associated to the previously discussed shape retention. The device of the present invention can nevertheless be stored in said flat, wide, folded configuration 50 (see Fig. 8) by virtue of the small tongues 18a having been described in connection with Fig. 4. This wide, folded configuration is besides very adequate when planning to submit the tubular bodies 2 to one or more ulterior operations, such as for example the inclusion of the group of additional sheets 30 having been described in connection with Fig. 5, or a post-printing operation or a sticking of labels in a space having been reserved for such a purpose.

Fig. 6 shows a sheet 40 of sheet material having typically been pre-printed and from which the only pieces 1 of the device of the invention are to be die-cut. In said sheet 40 six of said only pieces 1 have been represented with dash lines in a predetermined arrangement coinciding with the arrangement in which they will be ulteriorly die-cut. Said arrangement is such that those areas that will correspond to the overlapping portion 19 and to its extension 19a in each only piece 1 are adjacent to fringes of both lateral portions of the sheet 40, according to the width of a band of plastic film 41 typically issuing from a roll and provided to be applied on the central area of the sheet 40 in such a way that once having the only pieces 1 been die-cut said overlapping portions 19 and their corresponding extensions 19a are free of the plastic lining.

Fig. 7 shows a sheet 40 of sheet material with six of said only pieces 1 provided in a predetermined arrangement quite similar to that described in connection with Fig. 6. In the devices of the sheet 40 of Fig. 7 it is nevertheless intended to leave free spaces 45, shown in Figs. 8 and 9, designed to receive a personalized graphic information to be applied by means of a post-printing operation to be explained further below with reference to Fig. 9. The varnish-free spaces 45 must coincide with blank spaces provided during the pre-printing stage. Plates 42, 43 are arranged on said fringes of both lateral portions of the sheet 40 thus covering those areas that will correspond to the overlapping portion 19 and its extension 19a in each one only piece 1. Another plurality of plates 44 cover those areas corresponding to the free space 45 in each one only piece 1. In general and as per a known technique the plates 42, 43, 44 are integrated in one and the same template. The varnish is thereupon applied by any conventional process such as by silk-screen or offset printing or by spraying, and once said varnish has dried up the plates 42, 43, 44 are then removed, and the die-cutting of the sheet 40 is carried out, in such a way that said overlapping portions 19, their corresponding extensions 19a and the free spaces 45 are left unvarnished.

A process to apply an ulterior treatment is described below. In at least one of the panels of the tubular bodies 2, such as for example in the lateral panels 17, spaces 45 have been left unprinted (protecting plates 44) during the stage in which the sheet material was pre-printed.

Fig. 9 shows a tubular body 2 in said wide, folded configuration with the panel 17 on top, said unprinted space 45 being situated in the above-mentioned panel. A printing element, such as for example a printing block 46 of a block printing machine (not shown), carries out a post-printing operation on said unprinted space 45. Although the illustrated one is a post-printing operation carried out by the block printing process, said operation could as well be carried out by other processes such as by silk-screen or letterpress printing or the like, or else said operation could consist in sticking a printed label to said unprinted space 45. Such operations are greatly facilitated by the fact that the tubular bodies stored in the wide, folded configuration, whether grouped or in an individualized arrangement, can be easily positioned with accuracy in the printing machine or in the machine corresponding to the desired operation thanks to their rectilinear, squared edges.

Fig. 8 shows a piled up arrangement of the devices of the invention when they are adopting a flat, wide, folded configuration 50 facilitating (rectangular contour without projecting portions) the storage and transportation. Said folded configuration facilitates a post-printing in the reserved area 45, for example by means of a printing block 46, as shown in Fig. 9. Said flat, wide, folded configuration does also facilitate the automatic introduction of the device into envelopes to be thus ulteriorly forwarded.

## Claims

1. A device for assessing the postage of mail envelopes, said device being of the type formed from one only piece (1) of sheet material such as cardboard provided with openings, indentations and/or slits, said one only piece being apt to be folded or erected, in this latter condition defining a tubular body (2) comprising at least:
a first side panel (16) and a second side panel (17) being apt to receive graphic or written information to be printed on them, said panels being mutually connected through their basal edges that are kept at a distance from each other;
at least a fulcrum foot (3b) provided to support said tubular body (2) on a horizontal, flat surface (P), said at least one fulcrum foot (3b) providing a contact with said flat surface (P) which defines a fulcrum line (F) being arranged in a transverse arrangement with respect to said tubular body (2);
a portion (4) of the tubular body which is arranged in an overhanging arrangement with respect to said fulcrum line (F);
one or more slots (5, 6, 7) situated in said overhanging portion (4), said slots being substantially positioned as per a vertical plane being parallel to said fulcrum line, said slots defining one or more supports for a mail envelope (S); and
an impressed or printed indication of weight and/or postage associated to each of said slots (5, 6, 7);
in such a way that the weight of the envelope (S) is capable of causing said tubular body (2) to be tilted or not around the fulcrum line (F) depending on if said weight surpasses or not a threshold predetermined for each slot (5, 6, 7) and coinciding with the value indicated by each corresponding indication;
**characterized in that** it does besides comprise:
means to bring about a sudden, nonprogressive tilting of said tubular body (2) when said predetermined weight threshold is surpassed even by a small margin, said means providing a support immediately after the tilting; and
counterweight means being operative to provide a wide weighing range and an accurate calibration of the device thereby allowing this latter to preserve a wall thickness apt to facilitate its manipulation, as well as reduced dimensions facilitating its placement and simplifying its storage and/or forwarding.

2. A device as per claim 1, **characterized in that** said first and second side panels (16, 17) are mutually connected through their upper edges thus forming a dihedron, whereas said connection of their basal edges at a distance is carried out through a base panel (18) being foldable along its central line (20), said base panel (18) through one of its lateral edges being an extension of the second side panel (17) and at the opposite lateral edge incorporating an overlapping portion (19) provided for its adhesive attachment to the basal edge of the first side panel (16); and **in that** projecting from the basal edges of the first and second side panels (16, 17) and forming a common plane with them respective supporting feet (3a) and respective fulcrum feet (3b) have been provided, these latter defining said fulcrum line (F).

3. A device as per claim 2, **characterized in that** it comprises small tongues (18a) being an extension of the plane of one of the halves of the base panel (18) and projecting from a lateral edge of this latter being adjacent to said overlapping portion (19), said small tongues (18a) in the erected condition respectively leaning against the inner surface of said supporting foot (3a) and of said fulcrum foot (3b) in such a way that in the erected condition the base panel (18) has a tendency to remain in a slightly inwardly folded arrangement thereby maintaining its central line (20) away from said horizontal, flat supporting surface (P) thus tending to correct a shape retention acquired by the tubular body (2) during its storage in a flat, wide, folded configuration (50) with the base panel (18) folded and extended towards the outside, in said condition said tongues (18a) besides helping to preserve said flat arrangement due to their leaning with their ends against the inner surface of the feet (3a, 3b).

4. A device as per claim 2, **characterized in that** said means designed to provide a sudden, nonprogressive tilting are formed by a radiused vertex (3c) provided at the contour of each of the fulcrum feet (3b) and created by the intersection of the edges (3d, 3e) of said contour with different inclinations, the edge (3d) being closest to the overhanging portion (4) being provided with a slight inclination and with a transition to said radiused vertex (3c) which are such that they provide an area of possible contact points which is reduced enough to assure said sudden tilting, and a supporting profile provided to be operative after the tilting in order to avoid a premature wear of said vertex (3c).

5. A device as per claim 4, **characterized in that** it comprises means provided to reinforce and rigidify an area of said fulcrum feet (3b) which includes said radiused vertices (3c), said means being formed by one or more layers of a rigidizing and/or hardening material such as a glue or a varnish applied on said area of the fulcrum feet (3b), especially on the edges of the sheet material of the one only piece (1) corresponding to said area.

6. A device as per claim 2, **characterized in that** said counterweight means comprise an extension (19a) of an area of said overlapping portion (19) of variable width (A) comprised between the points of said fulcrum feet (3b) delimiting the fulcrum line (F) and the end of said overlapping portion (19) being opposite to said overhanging portion (4), and of a length (L) that is predetermined in terms of the desired counterweight, said extension (19a) being superimposed on a portion of the inner surface of at least the first side panel (16) of said tubular body (2) thus allowing the device when in the folded condition to adopt dimensions making it apt to be received into the most commonly used standardized mail envelopes.

7. A device as per claim 6, **characterized in that** said extension (19a) of the overlapping portion (19) adopts the shape of an elongated band incorporating one or more embossed indentation lines (21, 22) along which it can be bent thus forming two or more pleats when depending on the desired counterweight a length (L) of said extension (19a) is needed which is longer than the height of the panels (16, 17, 18) forming said tubular body (2).

8. A device as per claim 2, **characterized in that** it comprises means provided to facilitate said folding, in the two possible senses, of said base panel (18) along its central line (20), said base panel (18) being linked to the second side panel (17) and to the overlapping portion (19) by means of respective notches (13, 14), said means being formed by a slit (20a) cut along a substantial portion of said central line (20) without reaching any of its two ends, and by an embossed indentation (20b) provided in both faces of each of the portions of said central line (20) comprised between the slit (20a) and each of the lateral ends of the base panel (18), in such a way that the risk of fatigue failure of said central line (20) due to the repeated foldings in one or both senses is thus mitigated.

9. A device as per claim 8, **characterized in that** said base panel (18) does besides comprise small transverse slits (20c) delimiting the ends of the slit (20a) of said central line (20), in such a way that the adjacent embossed indentation lines (20b) are thus prevented from being torn.

10. A device as per claim 2, **characterized in that** it comprises means provided to protect and/or embellish the sheet material such as cardboard forming said one only piece (1), said means consisting in a layer of a transparent, waterproof material such as a plastic lining or a varnish applied on at least the in the erected condition open surface of said one only piece (1) without reaching the surface of the overlapping portion (19) and/or its extension (19a) including an adhesive or glue applied for their attachment to the inner surface of the first side panel (16).

11. A device as per claim 2, **characterized in that** each slot (5, 6, 7) comprises parallel edges ending at both ends in end portions converging in a "V"-shaped arrangement (5a, 6a, 7a) thus forming said supports in such a way that these latter support and concentrate the weight of the envelope (S) in said points, the distance between the fulcrum line (F) and a vertical plane comprising the "V"-shaped end portions (5a, 6a, 7a) of each slot (5, 6, 7) being predetermined in order to assess the postage of envelopes (S) corresponding to different ratings.

12. A device as per claim 11, **characterized in that** each of the slots is surrounded by a band of differentiated colour extending beyond its corresponding slot, and **in that** said end portions converging in a "V"-shaped arrangement (5a, 6a, 7a) are provided with radiused vertices.

13. A device as per claim 1, **characterized in that** it includes a group of additional sheets (30) containing graphic information on one or both sides, such as a promotional brochure, a calendar or the like, said sheets being bound through adequate means such as a spiral or rings surrounding the apex of the dihedron formed by said side panels (16, 17), in such a way that said sheets (30) can be turned over on top of the tubular body (2) to be thus flipped from one to the other side of this latter without varying the normal distance from their mass centre to the fulcrum line (F), said group of sheets (30) and said binding means (32) serving as an additional counterweight.

14. A process for manufacturing a device as per any of claims 2 through 13, **characterized in that** it comprises the stages of:
- pre-printing at least one face of a sheet (40) of sheet material thereby optionally reserving areas (45);
- die-cutting said sheet material to thus form said one only piece (1);
- bending said one only piece (1);
- gluing and bonding said one only piece (1) to form said tubular body (2);
**characterized in that** said process stages are carried out in an automated way thus obtaining the tubular bodies (2) in a flat, wide, folded configuration (50), said tubular bodies being stored in said wide, folded configuration (50) in an advantageously piled up arrangement with the folded base panel (18) extended towards the outside, this being achieved without having to carry out any additional manipulations; and **in that** in said die-cutting operation small tongues (18a) are configured which are an extension of the plane of one of the halves of the base panel (18) and project from a lateral edge of this latter being adjacent to said overlapping portion (19), said small tongues (18a) in the erected condition respectively leaning against the inner surface of said supporting foot (3a) and of said fulcrum foot (3b) of the first side panel (16), in such a way that when in the erected condition the base panel (18) has a tendency to remain in a slightly inwardly folded arrangement thus tending to correct a shape retention acquired by the tubular body (2) during a storage in said flat, wide, folded configuration (50), in said condition said tongues (18a) besides helping to preserve said flat arrangement due to their leaning with their ends against the inner surface of the feet (3a, 3b).

15. A process as per claim 14, **characterized in that** in said pre-printing stage carried out to print a sheet material a number of spaces (45) are left unprinted, in such a way that when said sheet material has been die-cut, folded, glued and bonded at least one of said unprinted spaces (45) is left on one of the panels (16, 17, 18) of each tubular body (2), and **in that** said tubular body (2) arranged in said wide, folded configuration (50) is submitted to a post-printing operation or to an operation in which a label is stuck on the corresponding at least one unprinted space (45).

16. A process as per claim 15, **characterized in that** after said pre-printing stage carried out to print said sheet (40) of sheet material and before said die-cutting stage the process comprises an additional stage in which a protecting/embellishing layer such as a plastic lining or a varnish layer is applied on the printed surface of the sheet (40) thereby leaving reserved areas corresponding to said overlapping portions (19), their extensions (19a) and said unprinted spaces (45).
